# EUROPEAN PATENT APPLICATION

(11) **EP 4 424 895 A1**
(43) Date of publication of application: **04.09.2024**
(21) Application number: 22884899.0
(22) Date of filing: 27.01.2022
(51) Int. Cl.: D04H 1/541, D04H 1/56, D04H 1/558, D04H 1/559, D01D 5/22, B32B 5/02, B32B 5/26, B32B 37/06

(54) **SILKY, FINE-DENIER NON-WOVEN FABRIC AND MANUFACTURING METHOD THEREFOR**

(30) Priority: 25.10.2021 CN 202111241758
(71) Applicant: Xiamen Yanjan New Material Co., Ltd, Xiamen, Fujian 361100 (CN)
(72) Inventor: CAI, Ji Xiang, Xiamen, Fujian 361100 (CN); ZHENG, Qing Zhong, Xiamen, Fujian 361100 (CN); WU, Dan Pin, Xiamen, Fujian 361100 (CN)
(74) Representative: Cabinet Chaillot
(86) International application number: PCT/CN2022/074242
(87) International publication number: WO 2023/070981

(57) **Abstract**

A silky, fine-denier non-woven fabric, the silky, fine-denier non-woven fabric comprising an upper fine-denier fiber web composed of two-component melt-blown fibers having a fiber denier ≤ 1.0 denier, and a lower coarse-denier fiber web composed of fibers having a fiber denier of 2.0 to 12.0 denier. The upper fine-denier fiber web has an air permeability of 100-300m³/m²/min. The two-component melt-blown fiber uses a melt-blown sparse carding process to directly form fine-denier fibers. Furthermore, the fineness of the melt-blown fiber and the air permeability of the upper fine-denier fiber web is controlled by means of controlling a distance between adjacent spinneret holes and the pressure of a hot gas flow. This not only satisfies the condition of the fiber denier of the fine-denier fiber ≤ 1.0 denier, the formed fine-denier fiber web having a silky, delicate and smooth feel, it also effectively prevents the problems of difficult carding and processing of fine-denier fibers.

## Description

### TECHNICAL FIELD

The present invention relates to the field of non-woven fabrics, and in particular to a silky, fine-denier non-woven fabric that is used in personal care and infant care, and a manufacturing method therefor.

### BACKGROUND OF THE INVENTION

At present, non-woven fabrics are often used in disposable hygiene products. As products made from non-woven fabrics have been gaining popularity among consumers, consumers have increasingly high requirements for the performance of non-woven fabric products, especially pertaining to tactility. Fiber denier of non-woven fabrics has a great influence on its tactility. Smaller fiber denier indicates a smaller fiber diameter, and the formed non-woven fabrics will be more silky, finer and smoother. Usually, non-woven fabrics used in a disposable hygiene product are mainly made of fibers with a fiber denier of 1.5 to 3.0. Although a non-woven fabric formed by fibers with fiber denier less than or equal to 1.0 is softer and finer, extremely thin fibers are difficult to card and process during production, and the formed non-woven fabric has a non-uniform mesh surface. If the fibers are produced by a melt blown process, although the fiber denier can be less than or equal to 1.0, the fibers are often arranged too densely, causing high fiber density with low air permeability, and the formed non-woven fabric is not suitable for use as a surface layer of a disposable hygiene product.

### BRIEF SUMMARY OF THE INVENTION

### TECHNICAL PROBLEM

The present invention aims to provide a silky fine-denier non-woven fabric and a manufacturing method therefor, which overcome defects of the existing products and production methods.

### TECHNICAL SOLUTION TO THE TECHNICAL PROBLEM

### TECHNICAL SOLUTION

To attain the above object, the present invention provides the following technical solution: a silky, fine-denier non-woven fabric, comprising an upper fine-denier fiber mesh composed of bi-component meltblown fibers with fiber denier less than or equal to 1.0, and a lower coarse-denier fiber mesh composed of fibers with a fiber denier of 2.0 to 12.0; the bi-component meltblown fibers are composed of two types of thermoplastic resins with a difference of more than 20°C in terms of melting point; a surface layer of each of the bi-component meltblown fibers is formed at least partially by one of said two types of the thermoplastic resins having a lower melting point; an air permeability of the upper fine-denier fiber mesh is 100 to 300 m³/m²/min.

The fiber denier of the bi-component meltblown fibers of the upper fine-denier fiber mesh is 0.1 to 1.0.

Each of the bi-component meltblown fibers is a bi-component sheath-core meltblown fiber, a bi-component orange carpel type meltblown fiber, or a bi-component side-by-side meltblown fiber.

The lower coarse-denier fiber mesh is a bi-component coarse-denier staple mesh, a hot-air-through non-woven fabric, a spunbond non-woven fabric, a hot rolled non-woven fabric, or a spunlace non-woven fabric.

A manufacturing method of a silky, fine-denier non-woven fabric, comprising the following steps: (1) supplying an upper fine-denier fiber mesh by using a meltblown process, wherein two types of thermoplastic resins with a difference in melting point of more than or equal to 20°C are heated through hot-melt extrusion devices respectively, and hot-melted thermoplastic resins of said two types of thermoplastic resins are extruded into a spinning device as hot melt trickles, and the hot melt trickles are ejected out of the spinning device through bi-component spinneret nozzles of a spinneret of the spinning device, and hot airflows supplied from the spinning device are blown towards the hot melt trickles ejected out of the spinning device so that the hot melt trickles are blown into fiber bundles with fiber denier less than or equal to 1.0, thereby forming bi-component meltblown fibers along with the hot airflows, and the bi-component meltblown fibers form the upper fine-denier fiber mesh, wherein, said bi-component spinneret nozzles are spaced apart from one another by 1.5 to 2.5 mm, a rotation speed of fans forming the hot airflows is less than 2000 rpm;

(2) supplying a lower coarse-denier fiber mesh, wherein the lower coarse-denier fiber mesh composed of fibers with a fiber denier of 2.0 to 12.0 is conveyed to a mesh stacking position where the upper fine-denier fiber mesh is stacked with the lower coarse-denier fiber mesh;

(3) stacking meshes, wherein the upper fine-denier fiber mesh is stacked with the lower coarse-denier fiber mesh to form a compound mesh wherein an upper layer of which is the upper fine-denier fiber mesh and a lower layer of which is the lower coarse-denier fiber mesh;

(4) forming said silky, fine-denier non-woven fabric, wherein the compound mesh passes through a heating device; since fine-denier fibers in the upper fine-denier fiber mesh are said bi-component meltblown fibers, low-melting-point resin on a surface layer of each bi-component meltblown fiber is melted in the heating device, so that adjacent fine-denier fibers inside the upper fine-denier fiber mesh, as well as the fine-denier fibers of the upper fine-denier fiber mesh adjacent to coarse-denier fibers of the lower coarse-denier fiber mesh, are consolidated, and then winding is performed to form the silky, fine-denier non-woven fabric.

In said step (1), each of the bi-component spinneret nozzles of the spinneret is a sheath-core type nozzle or an orange carpel type nozzle.

In said step (1), each of the bi-component spinneret nozzles of the spinneret is a side-by-side type nozzle.

Before said step (3), carrying out a crimping process of the upper fine-denier fiber mesh formed by the bi-component meltblown fibers each being a bi-component side-by-side meltblown fiber, wherein the upper fine-denier fiber mesh enters a hot air oven; and under an action of hot air at a temperature of 100°C to 110°C, the bi-component side-by-side meltblown fiber starts to crimp due to different shrinkage stresses of high-melting-point resin and low-melting-point resin in the bi-component side-by-side meltblown fiber, thereby forming a crimped upper fine-denier fiber mesh.

The lower coarse-denier fiber mesh is a mesh formed by bi-component coarse-denier staples; in said step (2), said bi-component coarse-denier staples having a fiber denier of 2.0 to 12.0 are loosened by a fiber unwinding and loosening machine and carded by a carding machine into said lower coarse-denier fiber mesh.

The lower coarse-denier fiber mesh is a hot-air-through non-woven fabric, a spunbond non-woven fabric, a hot-rolled non-woven fabric, or a spunlace non-woven fabric; in said step (2), unwinding said hot-air-through non-woven fabric, said spunbond non-woven fabric, said hot-rolled non-woven fabric, or said spunlace non-woven fabric by an unwinding device, and then conveying the same being unwound to a mesh stacking position of the upper fine-denier fiber mesh and the lower coarse-denier fiber mesh through guide rollers.

Said heating device is a hot air oven, a pair of hot rollers, or a combination of both.

A temperature of the heating device is 130 to 150°C.

### BENEFICIAL EFFECTS OF THE PRESENT INVENTION

### BENEFICIAL EFFECTS

According to the above technical solution, the upper fine-denier fiber mesh of the silky, fine-denier non-woven fabric of the present invention is composed of bi-component meltblown fibers. The bi-component meltblown fibers are directly formed from fine-denier fibers by using a sparse meltblown process, and fineness of the bi-component meltblown fibers and air permeability of the upper fine-denier fiber mesh are controlled by controlling a spacing between adjacent spinneret nozzles and pressure of hot airflows, so that the use requirements of disposable hygiene products are met. In this way, a fiber denier of the fine-denier fibers is less than or equal to 1.0, the formed upper fine-denier fiber mesh is silky, fine and smooth, and problems in the conventional technology that fine-denier fibers are difficult to card and process are effectively avoided. Also, the lower coarse-denier fiber mesh can improve a mechanical property of the silky, fine-denier non-woven fabric, so that the silky, fine-denier non-woven fabric can have better tensile strength even at a low gram weight; and the fiber denier of the lower coarse-denier fiber mesh is large, which facilitates flow guidance and permeation of liquid, and can improve fluffiness and resilience in a thickness direction of a compound non-woven fabric, thereby improving comfort during use.

### BRIEF DESCRIPTION OF THE DRAWINGS

FIG. 1 is a cross-sectional view of a silky, fine-denier non-woven fabric according to Embodiment 1 of the present invention.
FIG. 2 are cross-sectional views of a bi-component sheath-core meltblown fiber and a bi-component orange carpel type meltblown fiber according to the present invention.
FIG. 3 is a schematic diagram of manufacturing of a silky, fine-denier non-woven fabric according to Embodiment 1 of the present invention.
FIG. 4 is a cross-sectional view of a silky, fine-denier non-woven fabric according to Embodiment 2 of the present invention.
FIG. 5 is a cross-sectional view of a bi-component side-by-side meltblown fiber according to the present invention.
FIG. 6 is a schematic diagram of manufacturing of a silky, fine-denier non-woven fabric according to Embodiment 2 of the present invention.
FIG. 7 is a cross-sectional view of a silky, fine-denier non-woven fabric according to Embodiment 3 of the present invention.
FIG. 8 is a schematic diagram of manufacturing of a silky, fine-denier non-woven fabric according to Embodiment 3 of the present invention.

### Description of reference numerals:

1, 2, and 3: silky, fine-denier non-woven fabric; 11: bi-component sheath-core meltblown fiber; 11 a: high-melting-point resin; 11b: low-melting-point resin; 12: bi-component orange carpel type meltblown fiber; 12a: high-melting-point resin; 12b: low-melting-point resin; 21: bi-component side-by-side meltblown fiber; 21a: high-melting-point resin; 21b: low-melting-point resin; a1, a2, and a3: upper fine-denier fiber mesh; b1, b2, and b3: lower coarse-denier fiber mesh; and c1, c2 and c3: bi-component meltblown fiber.

Embodiment 1: A1 and A1' represent hot-melt extrusion devices; B1 represents a spinning device; C1 and C1' represent hot airflows; D1 represents a spinneret; E1 represents a hot air oven in a forming process; F1 represents an unwinding and loosening machine; G1 represents a carding machine.

Embodiment 2: A2 and A2' represent hot-melt extrusion devices; B2 represents a spinning device; C2 and C2' represent hot airflows; D2 represents a spinneret; E2 represents a hot air oven in a forming process; F2 represents an unwinding and loosening machine; G2 represents a carding machine; H2 represents a hot air oven in a crimping process of the upper fine-denier fiber mesh; and f2 represents a crimped upper fine-denier fiber mesh.

Embodiment 3: A3 and A3' represent hot-melt extrusion devices; B3 represents a spinning device; C3 and C3' represent hot airflows; D3 represents a spinneret; E3 represents a hot air oven in a forming process; H3 represents a hot air oven in a crimping process of the upper fine-denier fiber mesh; I3 represents guide rollers; J3 represents a pair of hot rollers; and f3 represents a crimped upper fine-denier fiber mesh.

### DETAILED DESCRIPTION OF THE INVENTION

### EMBODIMENTS OF THE PRESENT INVENTION

In order to further explain the technical solution of the present invention, a detailed description of the present invention is provided below through specific embodiments.

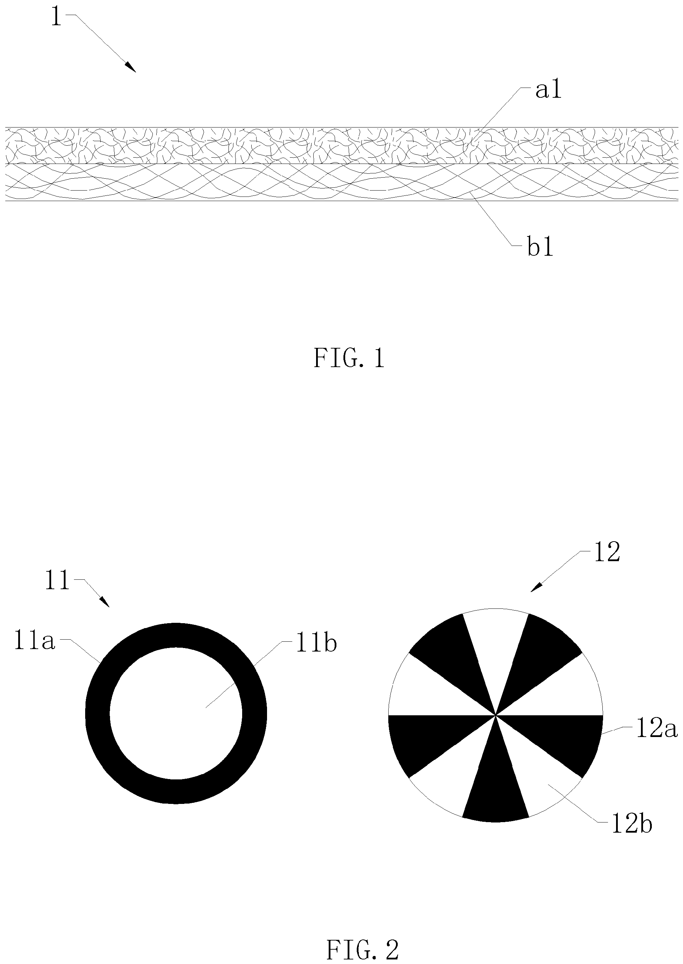

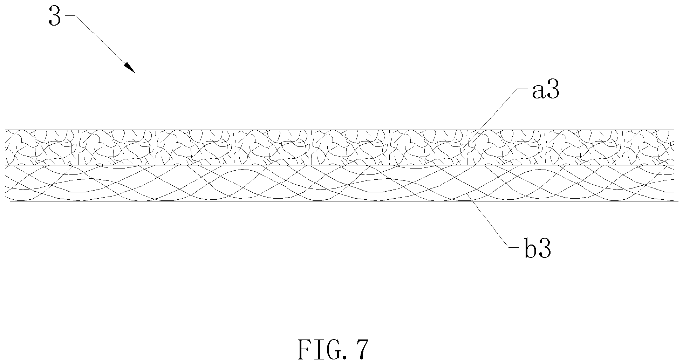

With reference to FIG. 1, FIG. 2, FIG. 4, FIG. 5, and FIG. 7, the present invention discloses a silky, fine-denier non-woven fabric 1, 2, and 3, comprising an upper fine-denier fiber mesh a1, a2, and a3 composed of bi-component meltblown fibers with fiber denier less than or equal to 1.0, and a lower coarse-denier fiber mesh b1, b2, and b3 composed of fibers with a fiber denier of 2.0 to 12.0. The bi-component meltblown fibers are composed of two types of thermoplastic resins with a difference of more than 20°C in terms of melting point; a surface layer of each of the bi-component meltblown fibers is formed at least partially by one of said two types of the thermoplastic resins having a lower melting point; an air permeability of the upper fine-denier fiber mesh is 100 to 300 m³/m²/min.

Each of the bi-component meltblown fibers is a bi-component sheath-core meltblown fiber 11, a bi-component orange carpel type meltblown fiber 12, or a bi-component side-by-side meltblown fiber 21; wherein a surface layer 11a of the bi-component sheath-core meltblown fiber 11 formed entirely by a low-melting-point resin, and a core 11b thereof is a high-melting-point resin; the bi-component orange carpel type meltblown fiber 12 is formed by a low-melting-point resin 12a and a high-melting-point resin 12b distributed as alternately arranged segments of a circle resembling how orange carpels are arranged in an orange when being viewed from a cross section thereof; the bi-component side-by-side meltblown fiber 21 is formed of a low-melting-point resin 21a and a high-melting-point resin 21b that are distributed side by side.

A fiber mesh of the lower coarse-denier fiber mesh b1, b2, and b3 is a bi-component coarse-denier staple mesh, a hot-air-through non-woven fabric, a spunbond non-woven fabric, a hot rolled non-woven fabric, or a spunlace non-woven fabric.

### Air permeability test

Test instrument: FX3300-IV air permeability tester.
Test samples: under same processing conditions, only the upper fine-denier fiber mesh a1 is manufactured, and the manufactured upper fine-denier fiber mesh a1 obtains its final form through a hot air oven E1, and 5 samples of 10 cm × 10 cm are taken.
Test steps: placing all the test samples in a laboratory with a room temperature of (23±2)°C and a relative humidity of (50±2)% for at least two hours; installing a clamping arm on an upper test head of the air permeability tester having a surface area of 38 cm², connecting a high-pressure rubber tube to the upper test head, fixing a lower test head having a surface area of 38 cm² within a sample diameter calibration ring, and connecting another high-pressure rubber tube to the lower test head; setting the following experiment conditions: a unit is selected as m³/m²/min, and test pressure is selected as 125 Pa; and placing a front side of the sample flatly on the lower test head, pressing down the clamping arm to start testing, and when it is indicated that the test has stably reached a correct test range and an indicator lamp shows a green color, noting down a reading of the test result.

### Embodiment 1

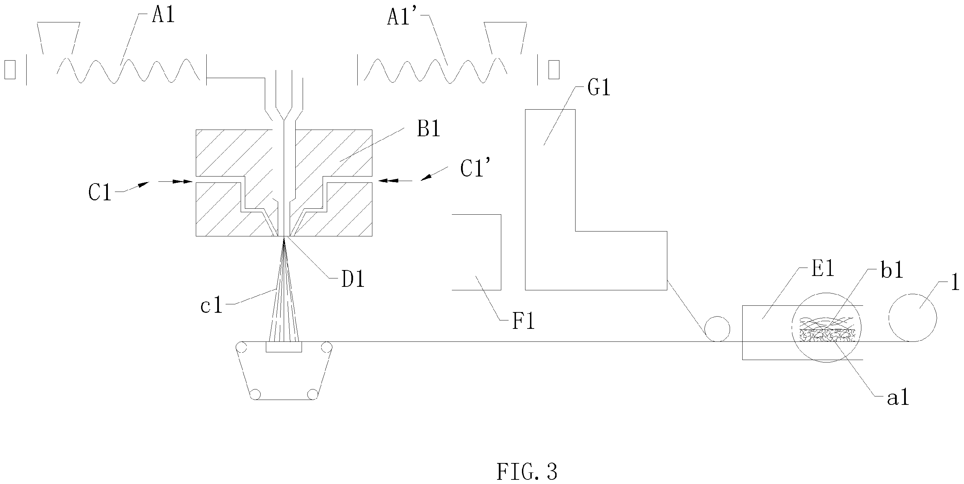

As shown in FIG. 3 in combination with FIG. 1 and FIG. 2, a silky, fine-denier non-woven fabric 1 of the present invention is manufactured by the following manufacturing method: (1) supplying an upper fine-denier fiber mesh a1: using a meltblown process, wherein two types of thermoplastic resins, namely high-density polyethylene (HDPE) and polypropylene (PP), with a difference in melting point of more than or equal to 20°C, are heated through hot-melt extrusion devices A1 and A1' respectively, and hot-melted HDPE and hot-melted PP are extruded into a spinning device B1 as hot melt trickles, and the hot melt trickles are ejected out of the spinning device B1 through bi-component spinneret nozzles of a spinneret D1 of the spinning device B1, and hot airflows C1 and C1' supplied from the spinning device B1 are blown towards the hot melt trickles ejected out of the spinning device B1 so that the hot melt trickles are blown into fiber bundles with fiber denier less than or equal to 1.0, thereby forming bi-component meltblown fibers c1 along with the hot airflows, and the bi-component meltblown fibers c1 form the upper fine-denier fiber mesh a1, wherein, said bi-component spinneret nozzles are spaced apart from one another by 1.5 mm, a rotation speed of fans forming the hot airflows is 1800 rpm, an air permeability of the upper fine-denier fiber mesh a1 is 100 m³/m²/min, and each of the bi-component meltblown fibers c1 is a bi-component sheath-core meltblown fiber 11 or a bi-component orange carpel type meltblown fiber 12.

(2) supplying a lower coarse-denier fiber mesh: bi-component coarse-denier staples with a fiber denier of 4.0 are loosened by a fiber unwinding and loosening machine F1, carded by a carding machine G1 into the lower coarse-denier fiber mesh b1, and the lower coarse-denier fiber mesh b1 is then conveyed to a mesh stacking position where the upper fine-denier fiber mesh a1 is stacked with the lower coarse-denier fiber mesh b1.

(3) mesh stacking process: the upper fine-denier fiber mesh a1 is stacked with the lower coarse-denier fiber mesh b1 to form a compound mesh wherein an upper layer of which is the upper fine-denier fiber mesh a1 and a lower layer of which is the lower coarse-denier fiber mesh b1.

(4) forming process: the compound mesh passes through a hot air oven E1, where a temperature of the hot air oven E1 is 130°C. Because fine-denier fibers in the upper fine-denier fiber mesh a1 are bi-component meltblown fibers c1, under the action of hot air, low-melting-point resin on a surface layer of each bi-component meltblown fiber is melted in the hot air oven E1, so that adjacent fine-denier fibers inside the upper fine-denier fiber mesh, as well as the fine-denier fibers of the upper fine-denier fiber mesh adjacent to coarse-denier fibers of the lower coarse-denier fiber mesh, are consolidated, and then winding is performed to form the silky, fine-denier non-woven fabric 1.

According to the above technical solution, the upper fine-denier fiber mesh a1 of the silky, fine-denier non-woven fabric of this embodiment comprises the bi-component meltblown fibers c1, the bi-component meltblown fibers c1 are directly formed from the fine-denier fibers by using a sparse meltblown process ("sparse" in terms of spacing between the spinneret nozzles), and the fine-denier fibers are consolidated with the lower coarse-denier fiber mesh to form the silky, fine-denier non-woven fabric. In a traditional meltblown process, in order to ensure uniformity of meltblown fibers and uniform distribution and a good mechanical property of formed meltblown non-woven fabric fibers, the spinneret nozzles are usually distributed with small spacing therebetween and high density, where adjacent spinneret nozzles are spaced apart from one another by approximately 0.6 mm to 0.7 mm. However, meltblown non-woven fabric fibers formed by such traditional meltblown process have high density and poor air permeability, which are difficult to meet the requirements for a hygiene product. If the spacing between the adjacent spinneret nozzles is increased directly in the traditional meltblown process, the formed meltblown non-woven fabric has a non-uniform gram weight and mesh, and consequently a poor mesh forming property and poor mechanical property. The silky, fine-denier non-woven fabric according to the present invention is manufactured in a manner of stacking and consolidating the upper fine-denier fiber mesh formed by the sparse meltblown process with the lower coarse-denier fiber mesh. In this way, silky, fine and soft tactile properties of the silky, fine-denier non-woven fabric are enhanced, and problems of non-uniform mesh and poor mechanical property of the non-woven fabric formed by direct application of a sparse melt blowing process in traditional technology are solved. Further, fineness of the meltblown fibers and air permeability of the upper fine-denier fiber mesh are controlled by controlling the spacing between adjacent spinneret nozzles and pressure of the hot airflows. Also, under same processing conditions, when only the upper fine-denier fiber mesh a1 is manufactured and formed in shape by the hot air oven E1, and samples are taken for testing the air permeability, a test result is that the air permeability is 100 m³/m²/min, while the air permeability of a conventional meltblown non-woven fabric is only 30 to 50 m³/m²/mi. The air permeability of the upper fine-denier fiber mesh in this embodiment is greatly improved compared with that of the conventional meltblown non-woven fabric, thereby meeting the use requirements of a disposable hygiene product. Therefore, the silky, fine-denier non-woven fabric manufactured by the process meets a requirement that the fiber denier of the fine-denier fibers is less than or equal to 1.0, and the formed fine-denier fiber mesh is silky, fine and smooth, and problems that the fine-denier fibers are difficult to card and process as in the conventional technology are effectively avoided.

### Embodiment 2

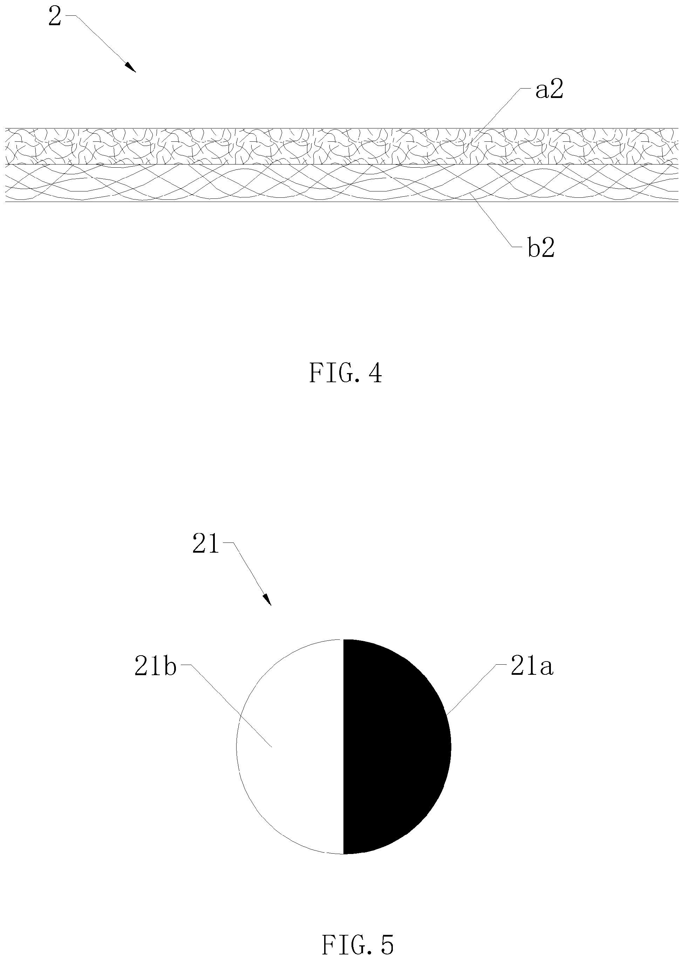

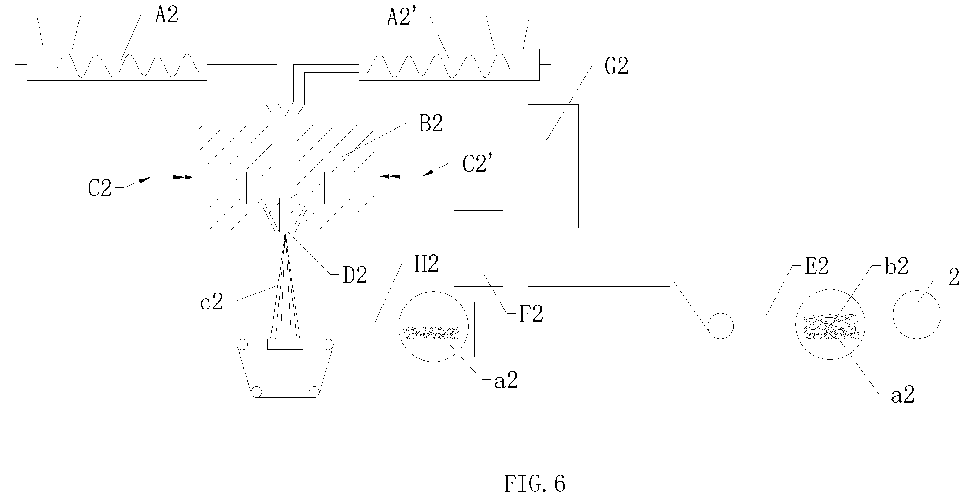

As shown in FIG. 4, FIG. 5, and FIG. 6, a silky, fine-denier non-woven fabric 2 of the present invention is manufactured by the following manufacturing method: (1) supplying an upper fine-denier fiber mesh a2: using a meltblown process, wherein two types of thermoplastic resins, namely high-density polyethylene (HDPE) and polyethylene terephthalate (PET), with a difference in melting point of more than or equal to 20°C, are heated through hot-melt extrusion devices A2 and A2' respectively, and hot-melted HDPE and hot-melted PET are extruded into a spinning device B2 as hot melt trickles, and the hot melt trickles are ejected out of the spinning device B2 through bi-component spinneret nozzles of a spinneret D2 of the spinning device B1, and hot airflows C2 and C2' supplied from the spinning device B2 are blown towards the hot melt trickles ejected out of the spinning device B2 so that the hot melt trickles are blown into fiber bundles with fiber denier of 0.8, thereby forming bi-component meltblown fibers c2 along with the hot airflows, and the bi-component meltblown fibers c2 form the upper fine-denier fiber mesh a2, wherein, said bi-component spinneret nozzles are spaced apart from one another by 2.0 mm, a rotation speed of fans forming the hot airflows is 1500 rpm, an air permeability of the upper fine-denier fiber mesh a2 is 185 m³/m²/min, and each of the bi-component meltblown fibers c2 is a bi-component side-by-side meltblown fiber 21.

(2) crimping process of the upper fine-denier fiber mesh: the upper fine-denier fiber mesh a2 formed by the bi-component meltblown fibers c2 each being said bi-component side-by-side meltblown fiber 21 enters a hot air oven H2; and under an action of hot air at a temperature of 100°C to 110°C, the bi-component side-by-side meltblown fiber 21 starts to crimp due to different shrinkage stresses of high-melting-point resin 21b and low-melting-point resin 21a, thereby forming a crimped upper fine-denier fiber mesh a2.

(3) supplying a lower coarse-denier fiber mesh: bi-component coarse-denier staples with a fiber denier of 3.0 are loosened by a fiber unwinding and loosening machine F2, carded by a carding machine G2 into the lower coarse-denier fiber mesh b2, and the lower coarse-denier fiber mesh b2 is then conveyed to a mesh stacking position where the crimped upper fine-denier fiber mesh a2 is stacked with the lower coarse-denier fiber mesh b2.

(4) mesh stacking process: the crimped upper fine-denier fiber mesh a2 is stacked with the lower coarse-denier fiber mesh b2 to form a compound mesh wherein an upper layer of which is the upper fine-denier fiber mesh a2 and a lower layer of which is the lower coarse-denier fiber mesh b2.

(5) forming process: the compound mesh passes through another hot air oven E2, where a temperature of said another hot air oven E2 is 135°C. Because fine-denier fibers in the crimped upper fine-denier fiber mesh a2 are bi-component meltblown fibers c2, under the action of hot air, low-melting-point resin on a surface layer of each bi-component meltblown fiber is melted in the hot air oven E2, so that adjacent fine-denier fibers inside the crimped upper fine-denier fiber mesh, as well as the fine-denier fibers of the crimped upper fine-denier fiber mesh adjacent to coarse-denier fibers of the lower coarse-denier fiber mesh, are consolidated, and then winding is performed to form the silky, fine-denier non-woven fabric 2.

According to the above technical solution, the upper fine-denier fiber mesh a2 of the silky, fine-denier non-woven fabric 2 of this embodiment is formed of bi-component side-by-side meltblown fibers 21. Because high-density polyethylene (HDPE) and polyethylene terephthalate (PET) have different shrinkage stresses, a pile of said bi-component side-by-side meltblown fibers freely curl under the action of hot air at a temperature of 100°C to 110°C prior to consolidating with one another, and then the low-melting-point resin of each of the bi-component side-by-side meltblown fibers starts to melt under the action of hot air at a temperature of 135°C and, and then the bi-component side-by-side meltblown fibers are consolidated with one another to form the upper fine-denier fiber mesh a2. In this way, the formed fiber crimping is not influenced by consolidation of adjacent fibers, crimping is better, and there are fewer bonding points between the bi-component side-by-side meltblown fibers of the upper fine-denier fiber mesh of the silky, fine-denier non-woven fabric due to the fiber crimping, thereby improving softness, fluffiness and air permeability of the silky, fine-denier non-woven fabric, and effectively avoiding problems in the conventional technology that the fine-denier fibers are difficult to card and process due to small denier. Also, the lower coarse-denier fiber mesh b2 is produced on the production line and is not wound, so a winding and unwinding device can be omitted, and an intermediate transport stage for the lower coarse-denier fiber mesh is also omitted, which reduce production costs and reduce the risk of pollution during transportation. Therefore, the fluffiness of the lower coarse-denier fiber mesh b2 according to the present invention is better than that of a non-woven fabric unwound from a manufacturing point which is not on the production line, and the fluffiness of the silky, fine-denier non-woven fabric 2 obtained is better after the lower coarse-denier fiber mesh b2 is stacked and formed with the upper fine-denier fiber mesh a2. In addition, the lower coarse-denier fiber mesh b2 produced on the production line may alternatively be a spunbond fiber mesh or a meltblown fiber mesh etc.

### Embodiment 3

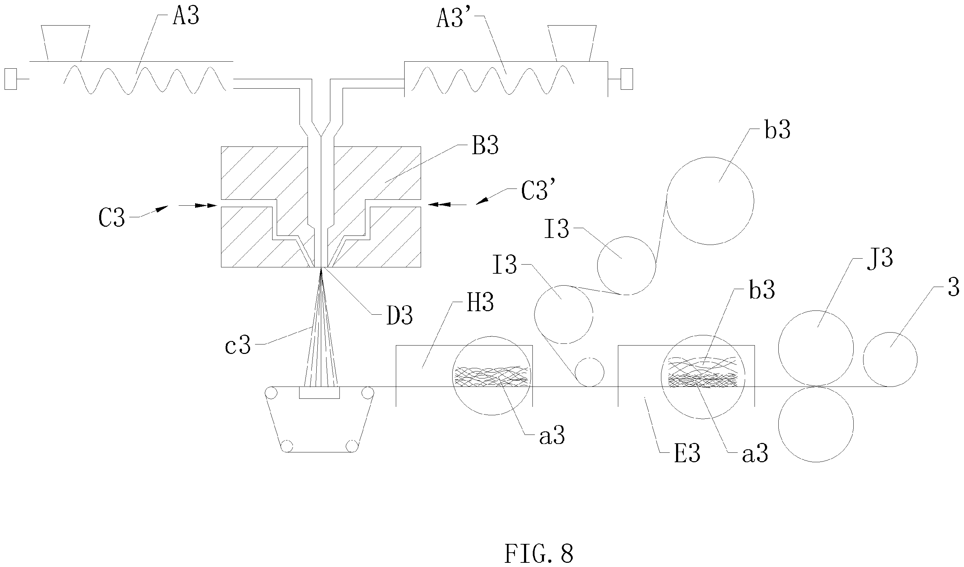

As shown in FIG. 5, FIG. 7, and FIG. 8, a silky, fine-denier non-woven fabric 3 of the present invention is manufactured by the following manufacturing method: (1) supplying an upper fine-denier fiber mesh a3: using a meltblown process, wherein two types of thermoplastic resins, namely low-melting-point polyethylene terephthalate (PET) and high-melting-point polyethylene terephthalate (PET), with a difference in melting point of more than or equal to 20°C, are heated through hot-melt extrusion devices A3 and A3' respectively, and hot-melted low-melting-point PET and hot-melted high-melting-point PET are extruded into a spinning device B3 as hot melt trickles, and the hot melt trickles are ejected out of the spinning device B3 through bi-component spinneret nozzles of a spinneret D3 of the spinning device B3, and hot airflows C3 and C3' supplied from the spinning device B3 are blown towards the hot melt trickles ejected out of the spinning device B3 so that the hot melt trickles are blown into fiber bundles with fiber denier of 0.6, thereby forming bi-component meltblown fibers c3 along with the hot airflows, and the bi-component meltblown fibers c3 form the upper fine-denier fiber mesh a3, wherein, said bi-component spinneret nozzles are spaced apart from one another by 2.5 mm, a rotation speed of fans forming the hot airflows is 1200 rpm, an air permeability of the upper fine-denier fiber mesh a3 is 300 m³/m²/min, and each of the bi-component meltblown fibers c3 is a bi-component side-by-side meltblown fiber 21.

(2) crimping process of the upper fine-denier fiber mesh: the upper fine-denier fiber mesh a3 formed by the bi-component meltblown fibers c3 each being said bi-component side-by-side meltblown fiber 21 enters a hot air oven H3; and under an action of hot air at a temperature of 100°C to 110°C, the bi-component side-by-side meltblown fiber 21 starts to crimp due to different shrinkage stresses of high-melting-point resin 21b and low-melting-point resin 21a, thereby forming a crimped upper fine-denier fiber mesh a3.

(3) supplying a lower coarse-denier fiber mesh: unwinding a lower coarse-denier fiber mesh b3 by an unwinding device, and then conveying the lower coarse-denier fiber mesh b3 being unwound to a mesh stacking position of the upper fine-denier fiber mesh a3 and the lower coarse-denier fiber mesh b3 through guide rollers I3; wherein the lower coarse-denier fiber mesh b3 is a hot-air-through non-woven fabric, a spunbond non-woven fabric, a hot-rolled non-woven fabric, or a spunlace non-woven fabric.

(4) mesh stacking process: the upper fine-denier fiber mesh a3 is stacked with the lower coarse-denier fiber mesh b3 to form a compound mesh wherein an upper layer of which is the upper fine-denier fiber mesh a3 and a lower layer of which is the lower coarse-denier fiber mesh b3.

(5) forming process: the compound mesh passes through another hot air oven E3, where a temperature of said another hot air oven E3 is 135°C. Because fine-denier fibers in the upper fine-denier fiber mesh a3 are bi-component meltblown fibers c3, under the action of hot air, low-melting-point resin on a surface layer of each bi-component meltblown fiber is melted in the hot air oven E3, so that adjacent fine-denier fibers inside the upper fine-denier fiber mesh, as well as the fine-denier fibers of the upper fine-denier fiber mesh adjacent to coarse-denier fibers of the lower coarse-denier fiber mesh, are consolidated, and then further passing through a pair of hot rollers J3 for further forming process, and finally winding is performed to form the silky, fine-denier non-woven fabric 3.

According to the above technical solution, the lower coarse-denier fiber mesh in this embodiment is the hot-air-through non-woven fabric, the spunbond non-woven fabric, the hot-rolled non-woven fabric, or the spunlace non-woven fabric, which can improve a mechanical property of the silky, fine-denier non-woven fabric, so that the silky, fine-denier non-woven fabric can have better tensile strength even at a low gram weight; and fiber denier of the lower coarse-denier fiber mesh is large, which facilitates flow guidance and permeation of liquid, and can improve fluffiness and resilience in a thickness direction of a compound non-woven fabric, thereby improving comfort during use. Further, the non-woven fabric of the lower coarse-denier fiber mesh may have different properties, such as an antibacterial property, a skin-friendly property, and a covering property, which may be characterized in the silky, fine-denier non-woven fabric fine-denier non-woven fabric when the non-woven fabric of the lower coarse-denier fiber mesh is combined and consolidated with the upper fine-denier fiber mesh.

The above descriptions are merely preferred embodiments of the present invention, and therefore shall not limit the scope of the present invention, that is, equivalent variations and modifications made according to the patent scope of the present invention and the teachings of this specification shall fall within the scope of the present invention.

## Claims

1. A silky, fine-denier non-woven fabric, comprising an upper fine-denier fiber mesh composed of bi-component meltblown fibers with fiber denier less than or equal to 1.0, and a lower coarse-denier fiber mesh composed of fibers with a fiber denier of 2.0 to 12.0; the bi-component meltblown fibers are composed of two types of thermoplastic resins with a difference of more than 20°C in terms of melting point; wherein a surface layer of each of the bi-component meltblown fibers is formed at least partially by one of said two types of the thermoplastic resins having a lower melting point; an air permeability of the upper fine-denier fiber mesh is 100 to 300 m³/m²/min.

2. The silky, fine-denier non-woven fabric of claim 1, wherein the fiber denier of the bi-component meltblown fibers of the upper fine-denier fiber mesh is 0.1 to 1.0.

3. The silky, fine-denier non-woven fabric of claim 1, wherein each of the bi-component meltblown fibers is a bi-component sheath-core meltblown fiber, a bi-component orange carpel type meltblown fiber, or a bi-component side-by-side meltblown fiber.

4. The silky, fine-denier non-woven fabric of claim 1, wherein the lower coarse-denier fiber mesh is a bi-component coarse-denier staple mesh, a hot-air-through non-woven fabric, a spunbond non-woven fabric, a hot rolled non-woven fabric, or a spunlace non-woven fabric.

5. A manufacturing method of a silky, fine-denier non-woven fabric, comprising the following steps:
(1) supplying an upper fine-denier fiber mesh by using a meltblown process, wherein two types of thermoplastic resins with a difference in melting point of more than or equal to 20°C are heated through hot-melt extrusion devices respectively, and hot-melted thermoplastic resins of said two types of thermoplastic resins are extruded into a spinning device as hot melt trickles, and the hot melt trickles are ejected out of the spinning device through bi-component spinneret nozzles of a spinneret of the spinning device, and hot airflows supplied from the spinning device are blown towards the hot melt trickles ejected out of the spinning device so that the hot melt trickles are blown into fiber bundles with fiber denier less than or equal to 1.0, thereby forming bi-component meltblown fibers along with the hot airflows, and the bi-component meltblown fibers form the upper fine-denier fiber mesh, wherein, said bi-component spinneret nozzles are spaced apart from one another by 1.5 to 2.5 mm, a rotation speed of fans forming the hot airflows is less than 2000 rpm;
(2) supplying a lower coarse-denier fiber mesh, wherein the lower coarse-denier fiber mesh composed of fibers with a fiber denier of 2.0 to 12.0 is conveyed to a mesh stacking position where the upper fine-denier fiber mesh is stacked with the lower coarse-denier fiber mesh;
(3) stacking meshes, wherein the upper fine-denier fiber mesh is stacked with the lower coarse-denier fiber mesh to form a compound mesh wherein an upper layer of which is the upper fine-denier fiber mesh and a lower layer of which is the lower coarse-denier fiber mesh;
(4) forming said silky, fine-denier non-woven fabric, wherein the compound mesh passes through a heating device; since fine-denier fibers in the upper fine-denier fiber mesh are said bi-component meltblown fibers, low-melting-point resin on a surface layer of each bi-component meltblown fiber is melted in the heating device, so that adjacent fine-denier fibers inside the upper fine-denier fiber mesh, as well as the fine-denier fibers of the upper fine-denier fiber mesh adjacent to coarse-denier fibers of the lower coarse-denier fiber mesh, are consolidated, and then winding is performed to form the silky, fine-denier non-woven fabric.

6. The manufacturing method of claim 5, wherein in said step (1), each of the bi-component spinneret nozzles of the spinneret is a sheath-core type nozzle or an orange carpel type nozzle.

7. The manufacturing method of claim 5, wherein in said step (1), each of the bi-component spinneret nozzles of the spinneret is a side-by-side type nozzle.

8. The manufacturing method of claim 7, wherein before said step (3), carrying out a crimping process of the upper fine-denier fiber mesh formed by the bi-component meltblown fibers each being a bi-component side-by-side meltblown fiber, wherein the upper fine-denier fiber mesh enters a hot air oven; and under an action of hot air at a temperature of 100°C to 110°C, the bi-component side-by-side meltblown fiber starts to crimp due to different shrinkage stresses of high-melting-point resin and low-melting-point resin in the bi-component side-by-side meltblown fiber, thereby forming a crimped upper fine-denier fiber mesh.

9. The manufacturing method of claim 5, wherein the lower coarse-denier fiber mesh is a mesh formed by bi-component coarse-denier staples; in said step (2), said bi-component coarse-denier staples having a fiber denier of 2.0 to 12.0 are loosened by a fiber unwinding and loosening machine and carded by a carding machine into said lower coarse-denier fiber mesh.

10. The manufacturing method of claim 5, wherein the lower coarse-denier fiber mesh is a hot-air-through non-woven fabric, a spunbond non-woven fabric, a hot-rolled non-woven fabric, or a spunlace non-woven fabric; in said step (2), unwinding said hot-air-through non-woven fabric, said spunbond non-woven fabric, said hot-rolled non-woven fabric, or said spunlace non-woven fabric by an unwinding device, and then conveying the same being unwound to a mesh stacking position of the upper fine-denier fiber mesh and the lower coarse-denier fiber mesh through guide rollers.

11. The manufacturing method of claim 5, wherein said heating device is a hot air oven, a pair of hot rollers, or a combination of both.

12. The manufacturing method of claim 5, wherein a temperature of the heating device is 130 to 150°C.
